# EUROPEAN PATENT SPECIFICATION

(11) **EP 2 862 865 B1**
(45) Date of publication and mention of the grant of the patent: **15.08.2018**
(21) Application number: 13848006.6
(22) Date of filing: 23.09.2013
(51) Int. Cl.: C08F 10/00, C08F 4/64, C07F 17/00, B01J 31/12, B01J 31/22, C08F 110/02, C08F 210/16, C08F 4/6592

(54) **NOVEL METALLOCENE COMPOUND, CATALYST COMPOSITION COMPRISING SAME, AND OLEFINIC POLYMER PRODUCTION METHOD USING SAME**
NEUARTIGE METALLOCENVERBINDUNG, KATALYSATORZUSAMMENSETZUNG DAMIT UND OLEFINPOLYMERHERSTELLUNGSVERFAHREN DAMIT
NOUVEAU COMPOSÉ DE MÉTALLOCÈNE, COMPOSITION DE CATALYSEUR LE COMPRENANT ET PROCÉDÉ DE PRODUCTION DE POLYMÈRE OLÉFINIQUE L'EMPLOYANT

(30) Priority: 17.10.2012 RU 2012144355; 17.06.2013 KR 20130069126
(43) Date of publication of application: 22.04.2015
(73) Proprietor: LG Chem, Ltd., Seoul 150-721 (KR); Federal State Budgetary Educational Institution of Higher Professional Education Lomonosov Moscow State University, Moscow 119991 (RU)
(72) Inventor: KIM, Se-Young, Daejeon 305-738 (KR); CHO, Min-Seok, Daejeon 305-738 (KR); NECHAEV, Mikhail, Moscow 115142 (RU); LEE, Ki-Soo, Daejeon 305-738 (KR); LEE, Yong-Ho, Daejeon 305-738 (KR); CHO, Kyung-Jin, Daejeon 305-738 (KR); LEE, Sung-Min, Daejeon 305-738 (KR); BUSH, Alexandr, Belgorod Belgorod region 308036 (RU); LEE, Min-jong, Daejeon 305-738 (KR); KHOKHLOV, Alexey, Moscow 119454 (RU); ASACHENKO, Andrey, Podol'sk Moscow region 142134 (RU); DZHEVAKOV, Pavel, Moscow 117279 (RU); MOROZOV, Oleg, Moscow 117593 (RU); VALEEVA, Yulia, Samara 443081 (RU); SMIRNOV, Alexander, Krasnogorsk Moscow region 143444 (RU)
(74) Representative: Goddar, Heinz J.
(86) International application number: PCT/KR2013/008490
(87) International publication number: WO 2014/061921

(56) References cited:
- EP-A1- 0 798 306
- KR-A- 20080 065 868
- KR-A- 20110 043 464
- US-A- 5 990 254
- US-A1- 2004 249 096
- US-B2- 7 112 638
- RONALD L. HALTERMAN ET AL.: 'Synthesis and structure of ansa-metallocene complexes (MZrC12, TiCl2, YCI, and LuCl) containing the bis(2-methyl-4,5,6,7-tetrahydroinden-yl) dimethylsilane ligand' JOURNAL OF ORGANOMETALLIC CHEMISTRY vol. 604, 2000, pages 12 - 19, XP004215344

## Description

### BACKGROUND OF THE INVENTION

### (a) Field of the Invention

The present invention relates to a novel metallocene compound, a catalyst composition comprising the same, and a method of preparing olefin-based polymers using the same. More particularly, the present invention relates to a novel metallocene compound having a tetrahydroindene structure, a catalyst composition comprising the same, and a method of preparing olefin-based polymers using the same.

This application claims priority to and the benefit of Russian Patent Application No. 2012144355 in the Russia Intellectual Property Office filed on October 17, 2012, and Korean Patent Application No. 10-2013-0069126 in the Korea Intellectual Property Office filed on June 17, 2013, which is hereby incorporated by reference in its entirety into this application.

### (b) Description of the Related Art

Metallocene catalysts for olefin polymerization have been developed over a long period of time. Typically metallocene compounds are used by being activated using aluminoxane, borane, borate, or other activating agents. For example, in the case of a metallocene compound having a ligand including a cyclopentadienyl group and two sigma chloride ligands, aluminoxane is adopted as an activating agent. In the case where the chloride group of the metallocene compound is replaced with another ligand (e.g. benzyl or trimethylsilylmethyl (-CH₂SiMe₃)), effects of increased catalytic activity or the like have been reported.

EP 1462464 discloses an example of polymerization using a hafnium metallocene compound having chloride, benzyl and trimethylsilylmethyl groups. Also, results of energy generation of active species varying depending on the type of alkyl ligand coupled with a central metal were reported (J. Am. Chem. Soc. 2000, 122, 10358). Korean Patent No. 820542 discloses a catalyst for olefin polymerization having a quinoline-based ligand, and this patent pertains to a catalyst having a living group including silicon and germanium atoms in addition to the methyl group.

In the early 1990s, [Me₂Si(Me₄C₅)N*t*Bu]TiCl₂ (Constrained-Geometry Catalyst (CGC)) was disclosed by DOW in US Patent No. 5,064,802. In copolymerization of ethylene and alpha-olefin, CGC is superior to metallocene catalysts known to date in terms of (1) high activity even at high polymerization temperature to produce a polymer having a high molcular weight, and (2) very high ability to copolymerize alpha-olefin having high steric hindrance such as 1-hexene and 1-octene. In addition, a variety of characteristics of CGC are gradually known upon polymerization, and thus thorough research into synthesis of derivatives thereof to serve as a polymerization catalyst is ongoing in academic and industrial fields.

As one approach, attempts have been made to synthesize metal compounds including a nitrogen substituent and a variety of other bridges instead of a silicon bridge and to perform polymerization using the same. Representative metal compounds were known to contain phosphorus, ethylene or propylene, methylidene and methylene bridges, in lieu of the silicon bridge of the CGC structure, but did not exhibit superior polymerization activity or copolymerization performance when applied to ethylene polymerization or copolymerization of ethylene and alpha-olefin, compared to CGC.

As another approach, a large number of compounds having an oxido ligand instead of the amido ligand of CGC were synthesized, and there were some attempts to perform polymerization using the same.

However, among all the attempts, only few catalysts are applied to actual commercial plants.

### SUMMARY OF THE INVENTION

Accordingly, the present invention has been made keeping in mind the above problems encountered in the related art, and an object of the present invention is to provide a metallocene compound having a novel structure.

Another object of the present invention is to provide a catalyst composition including the metallocene compound.

Still another object of the present invention is to provide a method of preparing an olefin-based polymer using the catalyst composition.

Yet another object of the present invention is to provide an olefine-based polymer prepared using the above method.

In order to accomplish the above objects, the present invention provides a metallocene compound represented by Formula 1 below: 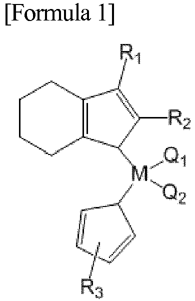
wherein R₁ and R₂ are the same as or different from each other, and are independently hydrogen, a C1∼C20 alkyl group, a C6∼C20 aryl group, a C7∼C20 alkylaryl group, a C7∼C20 arylalkyl group, or a C7∼C20 alkoxyaryl group;
R₃ is a C1∼C20 alkylsilyl group;
Q₁ and Q₂ are the same as or different from each other, and are independently hydrogen, a C1∼C20 alkyl group, or halogen; and
M is Zr, Ti, or Hf.

In addition, the present invention provides a catalyst composition, comprising the metallocene compound represented by Formula 1 and at least one cocatalyst compound selected from the group consisting of compounds represented by Formulas 2, 3 and 4 below:

[Formula 2] -[Al(R₄)-O]ₐ-

wherein R₄ is a halogen radical, or a C1∼C20 hydrocarbyl radical unsubstituted or substituted with halogen, and
a is an integer of 2 or more;

[Formula 3] D(R₅)₃

wherein D is aluminum or boron, and
R₅ is a halogen radical, or a C1∼C20 hydrocarbyl radical unsubstituted or substituted with halogen; and

[Formula 4] [L-H]⁺[ZA₄]⁻ or [L]⁺[ZA₄]⁻

wherein L is a neutral or cationic Lewis base,
H is a hydrogen atom,
Z is a Group 13 element, and
A is independently a C6∼C20 aryl or C1∼C20 alkyl radical, one or more hydrogen atoms of which are substituted with halogen, C1∼C20 hydrocarbyl, C1∼C20 alkoxy, or a phenoxy radical.

In addition, the present invention provides a method of preparing an olefin-based polymer using the catalyst composition and an olefin-based polymer prepared using the method.

According to the present invention, the novel metallocene compound can be usefully applied as a polymerization catalyst upon preparing olefin-based polymers.

### DETAILED DESCRIPTION OF THE EMBODIMENTS

In the following description, the terms "first", "second", and the like are used to describe a variety of components, and these terms are merely employed to differentiate a certain component from other components.

Also, the terms used herein are intended to describe exemplary embodiments, and are not construed as limiting the present invention. As used herein, a singular form includes a plural form unless otherwise stated in the text. Furthermore, the terms "comprise", "include" or "have" and any variations thereof as used herein are intended to cover not only the presence of the mentioned feature, number, step, component or combinations thereof, but also the presence or addition of one or more other features, numbers, steps, components and/or combinations thereof

Hereinafter, a detailed description will be given of embodiments of the present invention. The present invention is not limited to these embodiments and may be embodied in other forms, and should be understood to include all variations, equivalents or substitutions within the spirit and scope of the present invention.

According to an embodiment of the present invention, a metallocene compound is represented by Formula 1 below:

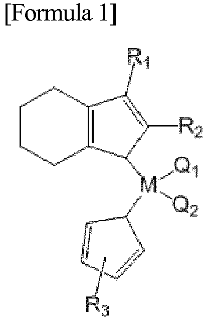

In Formula 1, R₁ and R₂ are the same as or different from each other, and are independently hydrogen, a C1∼C20 alkyl group, a C1∼C20 alkoxy group, a C2∼C20 alkenyl group, a C6∼C20 aryl group, a C7∼C20 alkylaryl group, a C7∼C20 arylalkyl group, or a C7∼C20 alkoxyaryl group;
R₃ is a C1∼C20 alkylsilyl group;
Q₁ and Q₂ are the same as or different from each other, and are independently hydrogen, a C1∼C20 alkyl group, or halogen; and
M is Zr, Ti, or Hf.

The substituents defined in Formula 1 as above are specified below.

The alkyl group includes a linear or branched alkyl group.

The alkoxy group includes a linear or branched alkoxy group.

The alkenyl group includes a linear or branched alkenyl group.

The aryl group includes a monocyclic, bicyclic or tricyclic aromatic hydrocarbon. In the illustrative embodiment of the invention, the aryl group is preferably C6∼C20, and specific examples thereof include, but are not limited to, phenyl, naphthyl, anthracenyl, pyridyl, dimethylanilinyl, anisolyl, etc.

The alkylaryl group designates an aryl group substituted with the alkyl group.

The arylalkyl group designates an alkyl group substituted with the aryl group.

The alkoxyaryl group means that one or more hydrogen atoms of the aryl group defined as above are substituted with an alkoxy group. Examples of the alkoxyaryl group include, but are not limited to, methoxyphenyl, ethoxyphenyl, propoxyphenyl, butoxyphenyl, pentoxyphenyl, hextoxyphenyl, heptoxy, octoxy, nanoxy, methoxybiphenyl, methoxynaphthalenyl, methoxyfluorenyl, methoxyanthracenyl, ethoxyanthracenyl, propoxyanthracenyl, methoxyfluorenyl, etc.

The alkylsilyl group means that one or more hydrogen atoms of the silyl group are substituted with an alkyl group. Examples of the alkylsilyl group include, but are not limited to, trimethylsilyl, triethylsilyl, tripropylsilyl, tributylsilyl, trihexylsilyl, triisopropylsilyl, triisobutylsilyl, triethoxysilyl, triphenylsilyl, tris(trimethylsilyl)silyl, etc.

Particularly, R₃ may be a trimethylsilyl group.

The metallocene compound of Formula 1 may be represented by any one selected from among the following formulas, but is not limited thereto.

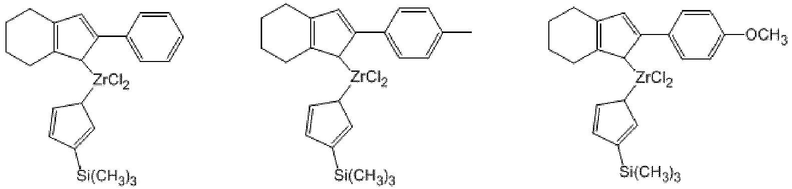

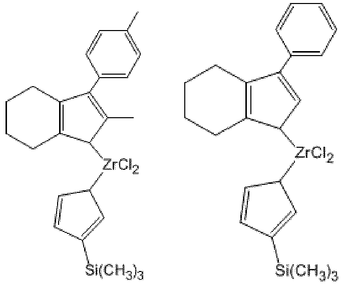

The metallocene compound represented by Formula 1 may be prepared using for example the following method, but is not limited thereto.

For instance, the metallocene compound represented by Formula 1 may be synthesized by reacting a tetrahydroindene derivative with a predetermined equivalent of n-BuLi to obtain a lithium salt, mixing the lithium salt with alkylsilyl cyclopentadienyl zirconium chloride, reacting the mixture, and filtering and concentrating the reaction product, thus obtaining a precipitate, and washing the precipitate, which is then dried under reduced pressure.

The metallocene compound represented by Formula 1 has a novel structure, and may be used as a polymerization catalyst for preparing olefin-based polymers. Particularly in the case where the above compound is used as a catalyst to prepare polyolefin copolymers using comonomers, the resulting copolymer may have a low molcular weight and a wide molcular weight distribution because of high catalytic activity thereof

According to another embodiment of the present invention, a catalyst composition is provided, which includes the metallocene compound represented by Formula 1 and at least one cocatalyst compound selected from the group consisting of compounds represented by Formulas 2, 3 and 4 below.

[Formula 2] -[Al(R₄)-O]ₐ-

In Formula 2, R₄ is a halogen radical, or a C1∼C20 hydrocarbyl radical unsubstituted or substituted with halogen, and a is an integer of 2 or more.

[Formula 3] D(R₅)₃

In Formula 3, D is aluminum or boron, and R₅ is a halogen radical, or a C1∼C20 hydrocarbyl radical unsubstituted or substituted with halogen.

[Formula 4] [L-H]⁺[ZA₄]⁻ or [L]⁺[ZA₄]⁻

In Formula 4, L is a neutral or cationic Lewis base, H is a hydrogen atom, Z is a Group 13 element, and A is independently a C6∼C20 aryl or C1∼C20 alkyl radical, one or more hydrogen atoms of which are substituted with halogen, C1∼C20 hydrocarbyl, C1∼C20 alkoxy, or a phenoxy radical.

Examples of the compound represented by Formula 2 include, but are not limited to, methylaluminoxane, ethylaluminoxane, isobutylaluminoxane, butylaluminoxane, etc.

Examples of the compound represented by Formula 3 include, but are not limited to, trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide and dimethylaluminum ethoxide.

Examples of the compound represented by Formula 4 include, but are not limited to, trimethylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(2-butyl)ammonium tetrakis(pentafluorophenyl)borate, N,N-dimethylanilinium tetrakis(pentafluorophenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl)borate, N,N-dimethylanilinium pentafluorophenoxytris (pentafluorophenyl)borate, N,N-diethylanilinium tetrakis (pentafluorophenyl)borate, N,N-dimethyl-2,4,6-trimethylanilinium tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl) borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-2,4,6-trimethylanilinium tetrakis(2,3,4,6 -tetrafluorophenyl)borate, decyldimethylammonium tetrakis(pentafluorophenyl)borate, dodecyldimethylammonium tetrakis(pentafluorophenyl)borate, tetradecyldimethylammonium tetrakis(pentafluorophenyl)borate, hexadecyldimethylammonium tetrakis(pentafluorophenyl)borate, octadecyldimethylammonium tetrakis(pentafluorophenyl)borate, eicosyldimethylammonium tetrakis(pentafluorophenyl)borate, methyldidecylammonium tetrakis(pentafluorophenyl)borate, methyldidodecylammonium tetrakis(pentafluorophenyl)borate, methylditetradecylammonium tetrakis(pentafluorophenyl)borate, methyldihexadecylammonium tetrakis(pentafluorophenyl)borate, methyldioctadecylammonium tetrakis(pentafluorophenyl)borate, methyldieicosylammonium tetrakis(pentafluorophenyl)borate, tridecylammonium tetrakis(pentafluorophenyl)borate, tridodecylammonium tetrakis(pentafluorophenyl)borate, tritetradecylammonium tetrakis(pentafluorophenyl)borate, trihexadecylammonium tetrakis(pentafluorophenyl)borate, trioctadecylammonium tetrakis(pentafluorophenyl)borate, trieicosylammonium tetrakis(pentafluorophenyl)borate, decyldi(n-butyl)ammonium tetrakis(pentafluorophenyl)borate, dodecyldi(n-butyl)ammonium tetrakis(pentafluorophenyl)borate, octadecyldi(n-butyl)ammonium tetrakis(pentafluorophenyl)borate, N,N-didodecylanilinium tetrakis(pentafluorophenyl)borate, N-methyl-N-dodecylanilinium tetrakis(pentafluorophenyl)borate, methyldi(dodecyl)ammonium tetrakis(pentafluorophenyl)borate, etc.

Examples of the dialkylammonium salt may include di(i-propyl)ammonium tetrakis(pentafluorophenyl)borate, dicyclohexylammonium tetrakis(pentafluorophenyl)borate, etc.

Examples of the carbonium salt may include tropylium tetrakis(pentafluorophenyl)borate, triphenylmethylium tetrakis(pentafluorophenyl)borate, benzene(diazonium) tetrakis(pentafluorophenyl)borate and so on.

In the embodiment of the invention, the cocatalyst compound selected from the group consisting of compounds represented by Formulas 2, 3 and 4 may be added at about 1 to about 20 mol, preferably about 1 to about 18 mol, and more preferably about 1 to about 15 mol, relative to 1 mol of the metallocene compound represented by Formula 1.

The cocatalyst compound is an alkylating agent. In order to sufficiently perform alkylation of the metal compound catalyst by the cocatalyst compound, the cocatalyst compound is preferably added at a molar ratio of about 1:1 or more relative to the metallocene compound represented by Formula 1. In contrast, in the case where the cocatalyst compound is excessively added, it is difficult to adjust the properties of the polymer, and particularly, the alkylated transition metal compound cannot be completely activated. To prevent this, the cocatalyst compound is preferably added at a molar ratio of about 1:20 or less relative to the metallocene compound represented by Formula 1.

The catalyst composition may be used to prepare an olefin homopolymer or copolymer, and preferably a block copolymer.

A solvent used in the preparation of the catalyst composition may include, but is not necessarily limited to, a hydrocarbon-based solvent, such as pentane, hexane, heptane, etc., or an aromatic solvent such as benzene, toluene, etc. Any solvent usable in the art may be applied.

Before use of the catalyst composition, the catalyst composition may be separately prepared, or the catalyst composition may be coupled in the presence of monomers to be polymerized and may thus be prepared in the same reaction system Preferably the catalyst is separately prepared in an appropriate solvent before added to the polymerization reactor. As such, because the catalyst compound and the catalyst composition are sensitive to moisture and oxygen, they are preferably prepared in an inert environment such as nitrogen or argon.

According to still another embodiment of the present invention, a method of preparing an olefin polymer is provided, which includes polymerizing an olefinic monomer in the presence of the above catalyst composition, and further, an olefin polymer prepared using the above method is provided.

In the method of preparing the olefin polymer, the olefinic monomer which may be polymerized using the catalyst composition may include ethylene, alpha-olefin having 3 or more carbons, cyclic olefin, diene olefin, triene olefin, etc.

More concretely, the olefinic monomer may include one or more selected from the group consisting of ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-itocene, norbornene, norbonadiene, ethylidene norbornene, phenyl norbornene, vinyl norbornene, dicyclopentadiene, 1,4-butadiene, 1,5-pentadiene, 1,6-hexadiene, styrene, alpha-methyl styrene, divinylbenzene, and 3-chloromethyl styrene; or two or more of these monomers may be mixed with each other to be copolymerized. The olefin polymer prepared using the method of the invention may be an olefin homopolymer or an olefin copolymer resulting from copolymeriz ing two or more monomers.

In the case where the olefin polymer is a copolymer of ethylene and another comonomer, the monomers which constitute the copolymer may include at least one alpha-olefin comonomer selected from the group consisting of propylene, 1-butene, 1-hexene, 4-methyl-1-pentene, and 1-octene.

As the olefin polymer of the invention is prepared in the presence of the catalyst composition including the metallocene compound, it may exhibit a low molcular weight and a wide molcular weight distribution. In particular, in the case where a polyolefin copolymer is prepared from ethylene and another comonomer, a copolymer having a low molcular weight and a wide molcular weight distribution may be achieved because of high catalytic activity.

In the method of preparing the olefin polymer according to the present invention, the polymerization using the catalyst composition may be carried out using a solution process.

The polymerization may be conducted using the above monomers under conditions of a temperature of about 10 to about 110°C and preferably about 80 to about 100°C and a pressure of about 15 to about 100 psi, and preferably about 30 to about 60 psi.

The catalyst composition may be used at about 1 x 10⁻⁷ to about 1 x 10⁻⁴ mol, and preferably about 1 x 10⁻⁶ to about 1 x 10⁻⁵ mol relative to 1 mol of the monomer to be polymerized.

Also in the method of preparing the olefin polymer, the catalyst composition may be used by being dissolved in or diluted with a C5∼C12 aliphatic hydrocarbon solvent such as pentane, hexane, heptane, nonane, decane or isomers thereof, an aromatic hydrocarbon such as toluene or benzene, a hydrocarbon substituted with a chlorine atom such as dichloromethane or chlorobenzene, etc., which are suitable for olefin polymerization.

The solvent used herein is treated with a small amount of alkyl aluminum, thereby removing a small amount of water or air acting as a catalyst poison.

A better understanding of the present invention may be obtained via the following examples which are set forth to illustrate, but are not to be construed as limiting the present invention.

### <Example>

### <Synthesis of metallocene compound>

### Preparation Example 1

### Preparation of (2-(4-methylphenyl)-4,5,6,7-tetrahydroindenyl)(3-trimethylsilyl cyclopentadienyl)zirconium dichloride

### Synthesis of bis(trimethylsilyl)cyclopentadiene

Dicyclopentadiene was decomposed into cyclopentadiene at 160°C. 121 ml (303 mmol) of n-BuLi (2.5M in hexane) was placed in a 1 L flask and cooled to -5°C after which 100 ml of ether and cyclopentadiene (20 g, 303 mmol) were added. This mixture was stirred for 18 hr, and the solvent and unreacted materials were removed via vacuum distillation. The product remaining behind in the vessel was washed three times or more with ether and dried in a vacuum, thereby obtaining 21.3 g (296 mmol) of a lithium salt of cyclopentadiene as white powder.

21.3 g (296 mmol) of the lithium salt of cyclopentadiene was dissolved in 100 ml of THF, and 50 ml of trichloromethyl silane was slowly added at 0°C. The reaction mixture was allowed to stand overnight at room temperature, and then quenched using an excess of water, followed by ether extraction. The resulting organic layer was dried over sodium sulfate, filtered, and distilled, giving trimethylsilyl cyclopentadiene (21.4 g, 53%) as a colorless liquid.

21.4 g of trimethylsilyl cyclopentadiene was diluted with 150 ml of ether, and 62 ml of n-BuLi (2.5M in hexane) was added, and the mixture was allowed to stand overnight at room temperature. The solvent was removed via a cannula, and the remaining product was dissolved in 100 ml of THF, after which 16.8 g (155 mmol) of chlorotrimethylsilane was slowly added at a low temperature of -78°C. The reaction mixture was stirred at room temperature for 1 hr, added with a small amount of methanol and HCl, and then poured onto ice water to terminate the reaction. Several extractions with hexane were performed, and the collected organic layer was dried over magnesium sulfate and filtered to remove the solvent, giving 27.7 g of bis(trimethylsilyl) cyclopentadiene (yield 85%) as a light yellow liquid.

### Synthesis of (3-trimethylsilyl cyclopentadienyl)zirconium chloride

ZrCl₄ (20.9 g) was added to 450 ml of toluene to prepare a suspension, to which the above-prepared bis(trimethylsilyl) cyclopentadiene (18.9 g, 90 mmol) was then added. The reaction mixture was slowly heated to 100°C and allowed to stand overnight. After completion of the reaction, the reaction product was filtered under argon (Ar), and stored at -30°C to produce a solid which was then filtered again and washed with cold hexane, giving 18.3 g of (3-trimethylsilyl cyclopentadienyl)zirconium chloride (yield 61%) as a white solid.
¹H-NMR (CDCl₃): 0.35 (s, 9H), 6.94 (m, 2H), 6.98 (m, 2H) ppm.

### Synthesis of (2-(4-methylphenyl)-4,5,6,7-tetrahydroindenyl)(3-trimethylsilyl cyclopentadienyl)zirconium dichloride

12 mmol 2-(4-methylphenyl)-4,5,6,7-tetrahydroindene was dissolved in 40 ml of ether and then mixed with 4.8 ml of n-BuLi (2.5M in hexane) at -20°C. This reaction mixture was stirred at room temperature for 8 hr, the solvent was removed under reduced pressure, and the produced lithium salt was added to 60 ml oftoluene to prepare a suspension. 3.6 g (0.9 equiv.) of the above-prepared (3-trimethylsilyl cyclopentadienyl)zirconium chloride was added at once to the suspension, and the mixture was maintained at 100°C overnight.

Thereafter, the reaction product was filtered through celite, and then concentrated so that the total volume was 10 ml or less. The produced precipitate was washed several times with cold hexane, and dried under reduced pressure, giving a desired metallocene compound.
¹H-NMR (CDCl₃): 0.21 (s, 9H), 1.58 (m, 1H), 1.93 (m, 2H), 2.37 (s, 3H), 2.58 (m, 2H), 2.82 (m, 2H), 5.99 (s, 2H), 6.27 (s, 2H), 6.37 (s, 2H), 7.22 (m, 2H), 7.42 (m, 2H) ppm;
¹³C-NMR (CDCl₃): 0.08, 21.22, 22.09, 24.61, 29.70, 108.73, 117.63, 124.90, 125.18, 126.17, 128.33, 129.79, 131.13, 132.57, 137.68 ppm

### Preparation Example 2

### Synthesis of (2-(4-methoxyphenyl)-4,5,6,7-tetrahydroindenyl)(3-trimethylsilyl cyclopentadienyl)zirconium dichloride

A metallocene compound was prepared in the same manner as in Preparation Example 1, with the exception that 2-(4-methoxyphenyl)-4,5,6,7-tetrahydroindene was used in lieu of 2-(4-methylphenyl)-4,5,6,7-tetrahydroindene.
¹H-NMR (CDCl₃): 0.27 (s, 9H), 1.63 (m, 2H), 2.02 (m, 2H), 2.63 (m, 2H), 2.89 (m, 2H), 4.00 (s, 3H), 6.03 (m, 2H), 6.41 (m, 2H), 6.54 (m, 1H), 7.08 (m, 2H), 7.33 (m, 2H), 7.58 (m, 1H) ppm;
¹³C-NMR (CDCl₃): 0.50, 21.72, 24.14, 54.72, 111.02, 111.34, 117.30, 120.77, 122.64, 124.62, 127.34, 128.46, 132.21, 155.27 ppm.

### Preparation Example 3

### Synthesis of (3-phenyl-4,5,6,7-tetrahydroindenyl)(3-trimethylsilyl cyclopentadienyl)zirconium dichloride

A metallocene compound was prepared in the same manner as in Preparation Example 1, with the exception that 3-phenyl-4,5,6,7-tetrahydroindene was used in lieu of 2-(4-methylphenyl)-4,5,6,7-tetrahydroindene.
¹H-NMR (CDCl₃): 0.25 (s, 9H), 1.51 (m, 1H), 1.68 (m, 2H), 1.71 (m, 1H), 2.51 (m, 2H), 2.97 (m, 1H), 3.19 (m, 1H), 5.74 (s, 1H), 6.11 (s, 1H), 6.42 (s, 1H), 6.72 (s, 1H), 7.27 (m, 1H), 7.32 (m, 2H), 7.38 (m, 2H) ppm;
¹³C-NMR(CDCl₃): 0.00,21.39,22.75,25.18,108.18,110.87,113.35,119.15,121.65, 124.54, 125.52, 127.43, 127.62, 128.78, 132.06, 134.04 ppm.

### Preparation Example 4

### Synthesis of (2-methyl-3-(4-methylphenyl)-4,5,6,7-tetrahydroindenyl)(3-trimethylsilyl cyclopentadienyl)zirconium dichloride

A metallocene compound was prepared in the same manner as in Preparation Example 1, with the exception that 2-methyl-3-(4-methylphenyl)-4,5,6,7-tetrahydroindene was used in lieu of 2-(4-methylphenyl)-4,5,6,7-tetrahydroindene.
¹H-NMR (CDCl₃): 0.26 (s, 9H), 1.55 (m, 1H), 1.73 (m, 2H), 2.21 (s, 3H), 2.25 (m, 1H), 2.31 (s, 3H), 2.56 (m, 1H), 2.64 (m, 1H), 3.00 (m, 1H), 5.94 (s, 1H), 6.09 (s, 1H), 6.23 (s, 1H), 6.49 (s, 2H), 7.12 (m, 4H) ppm;
¹³C-NMR (CDCl₃): 0.55, 17.08, 21.77, 23.03, 23.60, 25.37, 26.32, 111.74, 115.42, 116.63, 124.61, 126.03, 126.49, 126.59, 128.05, 129.11, 129.63, 130.80, 131.86, 135.66, 137.70 ppm.

### <Preparation of olefin copolymer>

### Example 1

About 180 ml of toluene treated with a small amount of TMA was placed in a 300 ml bottle and 5 ml of MAO (10 wt% toluene) was added. Separately, 11 mg of the 20 µmol metallocene compound of Preparation Example 1 was dissolved in 20 ml of toluene in a 100 ml flask, thus preparing a catalyst solution. 5 ml of the catalyst solution was then added into the bottle.

The bottle was placed in an oil bath heated to 90°C and the top of the bottle was fixed to a mechanical stirrer. The inside of the bottle was purged three times with ethylene gas and the reaction was carried out at 500 rpm for 30 min. After the reaction, the temperature was decreased to room temperature, and the gas was discharged from the bottle. The product of the bottle was poured into about 400 ml of ethanol, stirred for about 1 hr and filtered, thus obtaining a polymer which was then dried in a vacuum oven at 60°C for 20 hr.

The mass of the obtained polymer was calculated, from which the activity of the catalyst was evaluated, and a small amount of sample was subjected to GPC analysis, thus determining a weight average molcular weight and a molcular weight distribution.

### Example 2

Ethylene polymerization was performed in the same manner as in Example 1, with the exception that the metallocene compound of Preparation Example 2 was used in lieu of the metallocene compound of Preparation Example 1.

### Example 3

Ethylene polymerization was performed in the same manner as in Example 1, with the exception that the metallocene compound of Preparation Example 3 was used in lieu of the metallocene compound of Preparation Example 1.

### Example 4

Ethylene polymerization was performed in the same manner as in Example 1, with the exception that the metallocene compound of Preparation Example 4 was used in lieu of the metallocene compound of Preparation Example 1.

### Example 5

About 180 ml of toluene treated with a small amount of TMA was placed in a 300 ml bottle and 5 ml of MAO (10 wt% toluene) was added. Separately, 11 mg of the 20 µmol metallocene compound of Preparation Example 1 was dissolved in 20 ml of toluene in a 100 ml flask, thus preparing a catalyst solution. 5 ml of the catalyst solution was then added into the bottle.

5 ml of 1-hexene as a comonomer was added into the bottle, and the bottle was placed in an oil bath heated to 90°C and the top of the bottle was fixed to a mechanical stirrer. The inside of the bottle was purged three times with ethylene gas and the reaction was carried out at 500 rpm for 30 min. After the reaction, the temperature was decreased to room temperature, and the gas was discharged from the bottle. The product ofthe bottle was poured into about 400 ml of ethanol, stirred for about 1 hr and filtered, thus obtaining a polymer which was then dried in a vacuum oven at 60°C for 20 hr.

The mass of the obtained polymer was calculated, from which the activity of the catalyst was evaluated, and a small amount of sample was subjected to GPC analysis, thus determining a weight average molcular weight and a molcular weight distribution.

### Example 6

Ethylene/1-hexene copolymerization was performed in the same manner as in Example 5, with the exception that the metallocene compound of Preparation Example 2 was used in lieu ofthe metallocene compound of Preparation Example 1.

### Example 7

Ethylene/1-hexene copolymerization was performed in the same manner as in Example 5, with the exception that the metallocene compound of Preparation Example 3 was used in lieu ofthe metallocene compound of Preparation Example 1.

### Example 8

Ethylene/1-hexene copolymerization was performed in the same manner as in Example 5, with the exception that the metallocene compound of Preparation Example 4 was used in lieu ofthe metallocene compound of Preparation Example 1.

### <Test Example>

The properties ofthe polymers or copolymers of Examples 1 to 8 were evaluated. The results are given in Table 1 below.

**[Table 1]**

| | Activity (Kg PE/mmol hr) | Weight average molcular weight (g/mol) | Molcular weight distribution (PDI) |
|---|---|---|---|
| Ex. 1 | 6.3 | 30,000 | 4.7 |
| Ex. 2 | 6.8 | 34,000 | 4.4 |
| Ex. 3 | 4.5 | 71,000 | 8.5 |
| Ex. 4 | 6.8 | 53,000 | 4.2 |
| Ex. 5 | 6.0 | 17,000 | 4.0 |
| Ex. 6 | 7.7 | 14,000 | 5.6 |
| Ex. 7 | 6.3 | 47,000 | 10.3 |
| Ex. 8 | 8.6 | 26,000 | 7.6 |

As is apparent from Table 1, when the metallocene compound of the invention was used as a catalyst, polyolefins having a low molcular weight and a wide molcular weight distribution could be obtained. In particular, in the case where a polyolefin copolymer was prepared using the comonomer, a copolymer having a low molcular weight and a wide molcular weight distribution could be achieved because of high catalytic activity.

As described hereinbefore, the present invention provides a novel metallocene compound, a catalyst composition comprising the same and a method of preparing olefin-based polymers using the same. According to the present invention, the novel metallocene compound can be usefully applied as a polymerization catalyst upon preparing olefin-based polymers.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A metallocene compound represented by Formula 1 below: 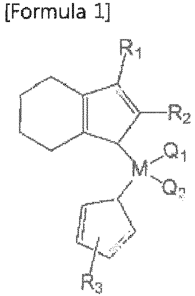
wherein R₁ and R₂ are same as or different from each other, and are independently hydrogen, a C1∼C20 alkyl group, a C6∼C20 aryl group, a C7∼C20 alkylaryl group, a C7∼C20 arylalkyl group, or a C7∼C20 alkoxyaryl group;
R₃ is a C1∼C20 alkylsilyl group;
Q₁ and Q₂ are same as or different from each other, and are independently hydrogen, a C1∼C20 alkyl group, or halogen; and
M is Zr, Ti, or Hf.

2. The metallocene compound of claim 1, wherein R₃ is a trimethylsilyl group.

3. The metallocene compound of claim 1, wherein the compound of Formula 1 is represented by any one selected from among the following formulas:

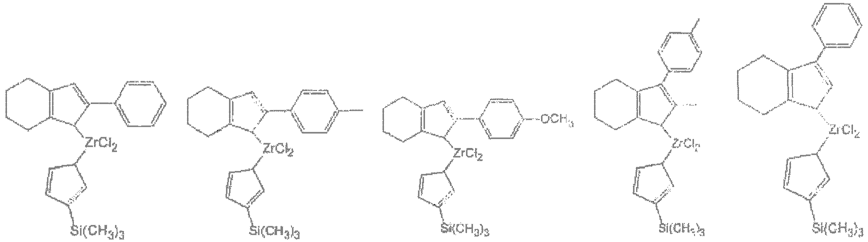

4. A catalyst composition, comprising:
a metallocene compound of any one of claims 1 to 3; and
at least one cocatalyst compound selected from the group consisting of compounds represented by Formulas 2, 3 and 4 below:
[Formula 2] -[Al(R₄)-O]ₐ-
wherein R₄ is a halogen radical, or a C1∼C20 hydrocarbyl radical unsubstituted or substituted with halogen, and
a is an integer of 2 or more;
[Formula 3] D(R₅)₃
wherein D is aluminum or boron, and
R₅ is a halogen radical, or a C1∼C20 hydrocarbyl radical unsubstituted or substituted with halogen; and
[Formula 4] [L-H]⁺[ZA₄]⁻ or [L]⁺[ZA₄]⁻
wherein L is a neutral or cationic Lewis base,
H is a hydrogen atom,
Z is a Group 13 element, and
A is independently a C6∼C20 aryl or C1∼C20 alkyl radical, one or more hydrogen atoms of which are substituted with halogen, C1∼C20 hydrocarbyl, C1∼C20 alkoxy, or a phenoxy radical.

5. A method of preparing an olefin-based polymer, comprising polymerizing an olefinic monomer in presence of the catalyst composition of claim 4.

6. The method of claim 5, wherein the olefinic monomer comprises one or more selected from the group consisting of ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-itocene, norbornene, norbonadiene, ethylidene norbornene, phenyl norbornene, vinyl norbornene, dicyclopentadiene, 1,4-butadiene, 1,5-pentadiene, 1,6-hexadiene, styrene, alpha-methyl styrene, divinylbenzene, and 3-chloromethyl styrene.

## Patentansprüche

1. Metallocenverbindung dargestellt durch die untern angegebene Formel 1: 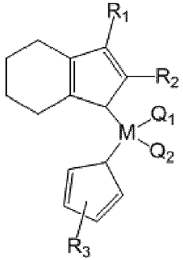
wobei R₂ und R₃ gleich oder voneinander verschieden sind und unabhängig Wasserstoff, eine C1∼C20 Alkylgruppe, eine C6-C20 Arylgruppe, eine C7∼C20 Alkylarylgruppe, eine C7∼C20 Arylalkylgruppe oder eine C7∼C20 Alkoxyarylgruppe sind;
R₃ eine C1∼C20 Alkylsilylgruppe ist;
Q₁ und Q₂ gleich oder unterschiedlich voneinander sind und unabhängig Wasserstoff, eine C1∼C20 Alkylgruppe oder Halogen sind; und
M gleich Zr, Ti oder Hf ist.

2. Metallocenverbindung nach Anspruch 1, wobei R₃ eine Trimethylsilylgruppe ist.

3. Metallocenverbindung nach Anspruch 1, wobei die Verbindung der Formel 1 dargestellt ist durch eine der folgenden Formeln:

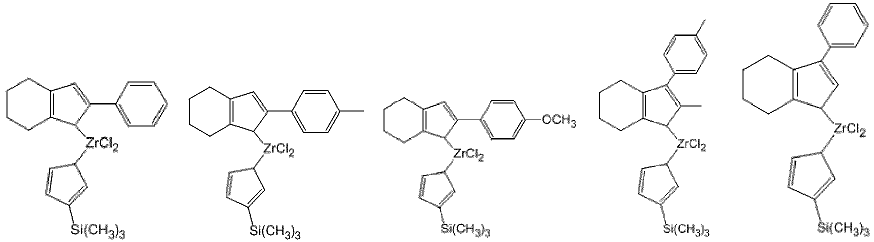

4. Katalysatorzusammensetzung, umfassend:
eine Metallocenverbindung nach einem der Ansprüche 1 bis 3; und
zumindest eine Cokatalysatorverbindnung ausgewählt aus der Gruppe, bestehend aus Verbindungen, dargestellt sind durch die Formeln 2, 3 und 4, die untern angegeben sind:
[Formel 2] -[Al(R₄)-O]ₐ-
wobei R₄ ein Halogenradikal oder ein C1∼C20 Hydrocarbylradikal, das unsubstituiert oder Halogen substituiert ist, und
a eine ganze Zahl von 2 oder mehr ist;
[Formel 3] D(R₅)₃
wobei D Alluminium oder Bor ist, und
R₅ ein Halogenradikal oder ein C1∼C20 Hydrocarbylradikal, das unsubstituiert oder mit Halogen substituiert ist, ist; und
[Formula 4] [L-H]+[ZA₄]- or [L]+[ZA₄]-
wobei L eine neutral oder kationische Lewis Base ist,
H ein Wasserstoffatom ist,
Z ein Element der Gruppe 13 ist, und
A unabhängig ein C6-C20 Aryl oder C1∼C20 Alkylradikal ist, von denen ein oder mehrere Wasserstoffatome durch Halogen, C1∼C20 Hydrocarbyl, C1∼C20 Alkoxy oder ein Phenoxyradikal substituiert sind.

5. Verfahren zum Herstellen eines olefinbasierten Polymers, umfassend das Polymerisieren eines olefinischen Monomers in der Gegenwart des Katalysators nach Anspruch 4.

6. Verfahren nach Anspruch 5, wobei das olefinische Monomer eines oder mehrere, ausgewählt aus der Gruppe, bestehend aus Ethylen, Propylen, 1-Buten, 1-Penten, 4-Methyl-1-penten, 1-Hexen, 1-Hepten, 1-Octen, 1-Decen, 1-Undecen, 1-Dodecen, 1-Tetradecen, 1-Hexadecen, 1-Itocen, Norbornen, Norbonadien, Ethylidennorbornen, Phenylnorbornen, Vinylnorbornen, Dicyclopentadien, 1,4-Butadien, 1,5-Pentadien, 1,6-Hexadien, Styrol, Alpha-methylstyrol, Divinylbenzol, und 3-Chlormethylstyrol umfasst.

## Revendications

1. Composé métallocène représenté par la formule 1 ci-dessous [Formule 1] 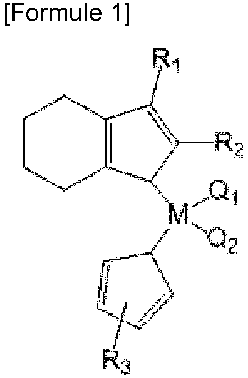
dans laquelle R₁ et R₂ sont identiques ou différents l'un de l'autre et représentent indépendamment l'hydrogène, un groupe alkyle en C1 à C20, un groupe aryle en C6 à C20, un groupe alkylaryle en C7 à C20, un groupe arylalkyle en C7 à C20 ou un groupe alcoxyaryle en C7 à C20 ;
R₃ représente un groupe alkylsilyle en C1 à C20 ;
Q₁ et Q₂ sont identiques ou différents l'un de l'autre et représentent indépendamment l'hydrogène, un groupe alkyle en C1 à C20 ; ou un halogène ; et
M représente Zr, Ti ou Hf.

2. Composé de métallocène selon la revendication 1, dans lequel R₃ représente un groupe triméthylsilyle.

3. Composé de métallocène selon la revendication 1, dans lequel le composé de la formule 1 est représenté par un composé quelconque sélectionné parmi les formules suivantes :

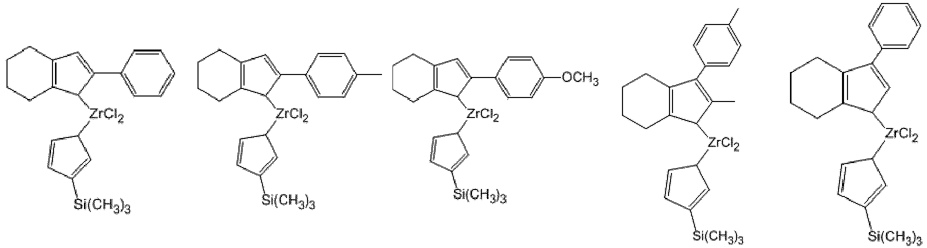

4. Composition de catalyseur comprenant :
un composé de métallocène selon l'une quelconque des revendications 1 à 3 ; et
au moins un cocatalyseur sélectionné dans le groupe constitué des composés représentés par les formules 2, 3 et 4 ci-dessous :
[Formule 2] -[Al(R₄)-O]ₐ⁻
dans laquelle formule R₄ représente un radical halogène, ou un radical hydrocarbyle en C1 à C20 non substitué ou substitué par un halogène, et
a désigne un nombre entier valant 2 ou supérieur ;
[Formule 3] D(R₅)₃
dans laquelle formule D représente l'aluminium et le bore, et
R₅ représente un radical halogène ou un radical hydrocarbyle en C1 à C20 non substitué ou substitué par un halogène ; et
[Formule 4] [L-H]+[ZA₄]⁻ ou [L][ZA₄]⁻
dans laquelle formule L est une base de Lewis neutre ou cationique.
H représente un atome d'hydrogène,
Z représente un élément du groupe 13, et
A représente indépendamment un aryle en C6 à C20 ou un radical alkyle en C1 à C20, un ou plusieurs atomes d'hydrogène qui sont substitué par l'halogène, un hydrocarbyle en C1 à C20, un alcoxy en C1 à C20 ou un radical phénoxy.

5. Procédé de préparation d'un polymère à base d'oléfine, comprenant la polymérisation d'un monomère oléfinique en présence d'une composition de catalyseur selon la revendication 4.

6. Procédé selon la revendication 5, dans lequel le monomère oléfinique comprend un ou plusieurs composés sélectionnés dans le groupe constitué d'éthylène, de propylène, de 1-butène, de 1-pentène, de 4-méthyl-1-pentène, de 1-hexène, de 1-heptène, de 1-octène, de 1-décène, de 1-undécène, de 1-dodécène, de 1-tétradècène, de 1-hexadécène, de 1-itocène, de norbornène, de norbonadiène, de norbornène éthylénique, de norbornène phénylique, de norbornène vinylique, de diclopentadiène, de 1,4-butadiène, de 1,5-pentadiène, de 1,6-hexadiène, de styrène, d'alpha-méthyl styrène, de divinylbenzène et de 3-chlorométhyl styrène.
